(19) Europäisches Patentamt
European Patent Office
Office européen des brevets

(11) Veröffentlichungsnummer: **0 627 437 A1**

(12) # EUROPÄISCHE PATENTANMELDUNG

(21) Anmeldenummer: **94107766.1**

(22) Anmeldetag: **19.05.94**

(51) Int. Cl.5: **C07F 9/6512**, A01N 57/08

(30) Priorität: **01.06.93 DE 4318110**

(43) Veröffentlichungstag der Anmeldung:
**07.12.94 Patentblatt 94/49**

(84) Benannte Vertragsstaaten:
**AT BE CH DE DK ES FR GB IT LI NL PT**

(71) Anmelder: **BAYER AG**
**D-51368 Leverkusen (DE)**

(72) Erfinder: **Maurer, Fritz, Dr., Nihon Bayer Agrochem. K. K.**
**Yuki Research Ctr.,**
**9511-4 Yuki**
**Yuki-shi, Ibaraki 307 (JP)**
Erfinder: **Erdelen, Christoph, Dr.**
**Unterbüscherhof 15**
**D-42799 Leichlingen (DE)**
Erfinder: **Hartwig, Jürgen, Dr.**
**Am Kloster 39**
**D-42799 Leichlingen (DE)**
Erfinder: **Turberg, Andreas, Dr.**
**Naheweg 19**
**D-40699 Erkrath (DE)**

(54) **Phosphor(Phosphon)Säure-Derivate und ihre Verwendung als Schädlingsbekämpfungsmittel.**

(57) Die Erfindung betrifft neue substituierte tert-Butyl-pyrimidinyl-(thio)phosphor(phosphon)säureester(amide) der allgemeinen Formel (I)

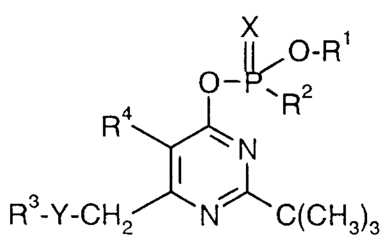

(I)

in welcher

- $R^1$ für Alkyl steht,
- $R^2$ für Alkyl, Alkoxy, Alkylthio oder Alkylamino steht,
- $R^3$ für Alkyl steht,
- $R^4$ für Wasserstoff, Halogen oder Alkyl steht,
- X für Sauerstoff oder Schwefel steht und
- Y für Sauerstoff, Schwefel, Sulfinyl (SO), Sulfonyl ($SO_2$) oder N-Alkyl steht,

welche als Schädlingsbekämpfungsmittel verwendet werden können.

EP 0 627 437 A1

Die Erfindung betrifft neue substituierte tert-Butyl-pyrimidinyl-(thio)phosphor(phosphon)säureester-(amide), ein Verfahren zu ihrer Herstellung sowie ihre Verwendung als Schädlingsbekämpfungsmittel, insbesondere als Insektizide, Akarizide und Nematizide.

Es ist bekannt, daß bestimmte substituierte Pyrimidinyl-thiophosphorsäure-dialkylester, wie z.B. Thiophosphorsäure-O,O-diethylester-O-(2-methoxy-4-methoxymethyl-6-pyrimidinyl-ester) und Thiophosphorsäure-O,O-diethylester-O-(2-methyl-4-methoxymethyl-6-pyrimidinyl-ester) insektizide, akarizide und nematizide Eigenschaften aufweisen (vgl. DE-OS 2703310 und DE-OS 2804889). Die Wirksamkeit dieser bekannten Verbindungen ist jedoch unter bestimmten Umständen, insbesondere bei niedrigen Wirkstoffkonzentrationen und Aufwandmengen, nicht immer ganz zufriedenstellend.

Es wurden nun die neuen substituierten tert-Butyl-pyrimidinyl-(thio)phosphor(phosphon)säureester-(amide) der allgemeinen Formel (I)

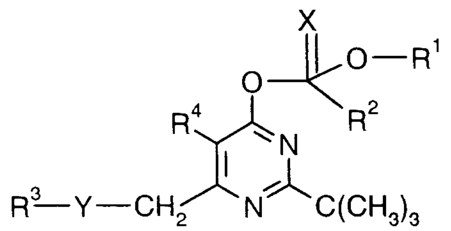

(I)

in welcher

- $R^1$ für Alkyl steht,
- $R^2$ für Alkyl, Alkoxy, Alkylthio oder Alkylamino steht,
- $R^3$ für Alkyl steht,
- $R^4$ für Wasserstoff, Halogen oder Alkyl steht,
- X für Sauerstoff oder Schwefel steht und
- Y für Sauerstoff, Schwefel, Sulfinyl (SO), Sulfonyl ($SO_2$) oder N-Alkyl steht,

gefunden.

Weiter wurde gefunden, daß man die neuen substituierten tert-Butyl-pyrimidinyl(thio)phosphor-(phosphon)säureester(amide) der allgemeinen Formel (I) erhält, wenn man (Thio)Phosphor(phosphon)säureester(amid)chloride der allgemeinen Formel (II)

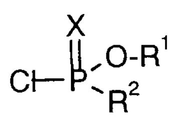

(II)

in welcher
$R^1$, $R^2$ und X die oben angegebene Bedeutung haben,
mit Hydroxypyrimidinderivaten der allgemeinen Formel (III)

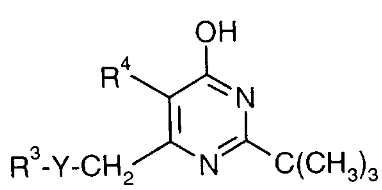

(III)

in welcher
$R^3$, $R^4$ und Y die oben angegebene Bedeutung haben,
gegebenenfalls in Gegenwart eines Säureakezptors und gegebenenfalls in Gegenwart eines Verdünnungsmittels umsetzt.

Die neuen Verbindungen der allgemeinen Formel (I) verfügen über Eigenschaften, die ihre Verwendung als Schädlingsbekämpfungsmittel ermöglichen. Sie zeigen starke Wirkung gegen Arthropoden und Nematoden und können insbesondere zur Bekämpfung von Insekten, Milben und Nematoden verwendet werden.

Bevorzugte Substituenten bzw. Bereiche der in den oben und nachstehend erwähnten Formeln aufgeführten Reste werden im folgenden erläutert:
In den allgemeinen Formeln bedeutet Alkyl geradkettiges oder verzweigtes Alkyl mit vorzugsweise 1 bis 8 Kohlenstoffatomen, besonders bevorzugt mit 1 bis 6 und ganz besonders bevorzugt mit 1 bis 4 Kohlenstoffatomen. Beispielhaft seien genannt: Methyl, Ethyl, n- und i-Propyl, n-, i-, s- und t-Butyl, Pentyl, Hexyl und Octyl.

Alkyl in N-Alkyl (Definition von Y) ist geradkettig oder verzweigt und enthält vorzugsweise 1 bis 6, insbesondere 1 bis 4 und ganz besonders 1 bis 3 Kohlenstoffatome, wobei beispielhaft Methyl, Ethyl und i- und s-Propyl genannt seien.

Alkoxy in den allgemeinen Formeln ist geradkettiges oder verzweigtes Alkoxy mit vorzugsweise 1 bis 6, insbesondere 1 bis 4 Kohlenstoffatomen. Beispielhaft seien Methoxy, Ethoxy, Propoxy, Butoxy sowie ihre Isomeren, wie z.B. i-Propoxy, i-, s- und t-Butoxy genannt.

Alkylthio in den allgemeinen Formeln ist geradkettiges oder verzweigtes Alkylthio mit vorzugsweise 1 bis 6 und besonders bevorzugt 1 bis 4 Kohlenstoffatomen, beispielsweise Methylthio, Ethylthio, Propylthio, Butylthio, Pentylthio sowie ihre Isomeren, wie z.B. i-Propylthio, i-, s- und t-Butylthio, 1-Methyl-butylthio, 2-Methyl-butylthio und 3-Methyl-butylthio.

Alkylamino in den allgemeinen Formeln steht für eine Aminogruppe mit 1 oder 2 Alkylgruppen (also für Mono- und Di-Alkylamino), welche jeweils geradkettig oder verzweigt sein können und vorzugsweise 1 bis 5, insbesondere 1 bis 4 und besonders bevorzugt 1 bis 3 Kohlenstoffatome je Alkylgruppe enthalten, wobei Methyl, Ethyl, n- und i-Propyl genannt seien. Beispielhaft seien Methylamino, Ethylamino, n- oder i-Propylamino, Dimethylamino, Diethylamino, Di-n-propylamino und Di-i-propylamino genannt.

Halogen bedeutet Fluor, Chlor, Brom oder Iod, vorzugsweise Fluor, Chlor oder Brom, besonders bevorzugt Fluor oder Chlor und ganz besonders bevorzugt Chlor.

In den allgemeinen Formeln steht $R^1$ vorzugsweise für $C_1$-$C_8$-Alkyl.

In den allgemeinen Formeln steht $R^2$ vorzugsweise für $C_1$-$C_8$-Alkyl, $C_1$-$C_8$-Alkoxy, $C_1$-$C_8$-Alkylthio, Mono-($C_1$-$C_5$-alkyl)-amino oder Di-($C_1$-$C_5$-alkyl)amino.

In den allgemeinen Formeln steht $R^3$ vorzugsweise für $C_1$-$C_8$-Alkyl.

In den allgemeinen Formeln steht $R^4$ vorzugsweise für Wasserstoff, Halogen, (vorzugsweise für Fluor, Chlor oder Brom) oder $C_1$-$C_8$-Alkyl.

In den allgemeinen Formeln steht Y vorzugsweise für Sauerstoff, Schwefel, Sulfinyl, Sulfonyl oder N-($C_1$-$C_6$-Alkyl).

In den allgemeinen Formeln steht X vorzugsweise für Sauerstoff oder Schwefel.

In den allgemeinen Formeln steht $R^1$ besonders bevorzugt für $C_1$-$C_6$-Alkyl.

In den allgemeinen Formeln steht $R^2$ besonders bevorzugt für $C_1$-$C_6$-Alkyl, $C_1$-$C_6$-Alkoxy, $C_1$-$C_6$-Alkylthio, Mono-($C_1$-$C_4$-alkyl)-amino oder Di-($C_1$-$C_4$-alkyl)amino.

In den allgemeinen Formeln steht $R^3$ besonders bevorzugt für $C_1$-$C_6$-Alkyl.

In den allgemeinen Formeln steht $R^4$ besonders bevorzugt für Wasserstoff, Halogen, (vorzugsweise für Fluor, Chlor oder Brom) oder $C_1$-$C_6$-Alkyl.

In den allgemeinen Formeln steht Y besonders bevorzugt für Sauerstoff, Schwefel, Sulfinyl, Sulfonyl oder N-($C_1$-$C_4$-Alkyl).

In den allgemeinen Formeln steht X besonders bevorzugt für Sauerstoff oder Schwefel.

In den allgemeinen Formeln steht $R^1$ ganz besonders bevorzugt für $C_1$-$C_4$-Alkyl.

In den allgemeinen Formeln steht $R^2$ ganz besonders bevorzugt für $C_1$-$C_4$-Alkyl, $C_1$-$C_4$-Alkoxy, $C_1$-$C_4$-Alkylthio, Mono-($C_1$-$C_3$-alkyl)-amino oder Di-($C_1$-$C_3$-alkyl)-amino.

In den allgemeinen Formeln steht $R^3$ ganz besonders bevorzugt für $C_1$-$C_4$-Alkyl.

In den allgemeinen Formeln steht $R^4$ ganz besonders bevorzugt für Wasserstoff, Halogen, (vorzugsweise für Fluor, Chlor oder Brom) oder $C_1$-$C_4$-Alkyl.

In den allgemeinen Formeln steht Y ganz besonders bevorzugt für Sauerstoff, Schwefel, Sulfinyl, Sulfonyl oder N-($C_1$-$C_3$-Alkyl).

In den allgemeinen Formeln steht X ganz besonders bevorzugt für Sauerstoff oder Schwefel.

In den allgemeinen Formeln steht $R^1$ besonders hervorgehoben für Methyl, Ethyl, n-Propyl oder i-Propyl.

In den allgemeinen Formeln steht $R^2$ besonders hervorgehoben für Methyl, Ethyl, Methoxy, Ethoxy, n-Propyloxy, i-Propyloxy, Methylthio, Ethylthio, n-Propylthio, i-Propylthio, n-Butylthio, i-Butylthio, s-Butylthio oder t-Butylthio.

In den allgemeinen Formeln steht $R^3$ besonders hervorgehoben für Methyl, Ethyl, n-Propyl oder i-Propyl.

In den allgemeinen Formeln steht $R^4$ besonders hervorgehoben für Wasserstoff, Halogen, (vorzugsweise Chlor) oder Methyl, wobei als $R^4$ Wasserstoff bevorzugt wird.

In den allgemeinen Formeln steht Y besonders hervorgehoben für Sauerstoff, Schwefel, Sulfinyl oder Sulfonyl.

In den allgemeinen Formeln steht X besonders hervorgehoben für Schwefel.

Die oben aufgeführten allgemeinen oder in Vorzugsbereichen aufgeführten Restedefinitionen bzw. Erläuterungen können untereinander, also auch zwischen den jeweiligen Bereichen und Vorzugsbereichen beliebig kombiniert werden. Sie gelten für die Endprodukte sowie für die Vor- und Zwischenprodukte entsprechend.

Erfindungsgemäß bevorzugt werden die Verbindungen der allgemeinen Formel (I), in welchen eine Kombination der vorstehend als bevorzugt (vorzugsweise) aufgeführten Bedeutungen vorliegt.

Erfindungsgemäß besonders bevorzugt werden die Verbindungen der allgemeinen Formel (I), in welchen eine Kombination der vorstehend als besonders bevorzugt aufgeführten Bedeutungen vorliegt.

Erfindungsgemäß ganz besonders bevorzugt werden die Verbindungen der allgemeinen Formel (I) verwendet, in welchen eine Kombination dieser vorstehend als ganz besonders bevorzugt aufgeführten Bedeutungen vorliegt.

Erfindungsgemäß besonders hervorgehoben werden die Verbindungen der allgemeinen Formel (I), in welchen eine Kombination der vorstehend als besonders hervorgehoben aufgeführten Bedeutungen vorliegt.

Verwendet man beispielsweise Thiophosphorsäure-chlorid-O-ethylester-S-propylester und 2-tert-Butyl-4-hydroxy-6-isopropoxymethyl-pyrimidin als Ausgangsstoffe, so kann der Reaktionsablauf beim erfindungsgemäßen Verfahren durch das folgende Formelschema wiedergegeben werden:

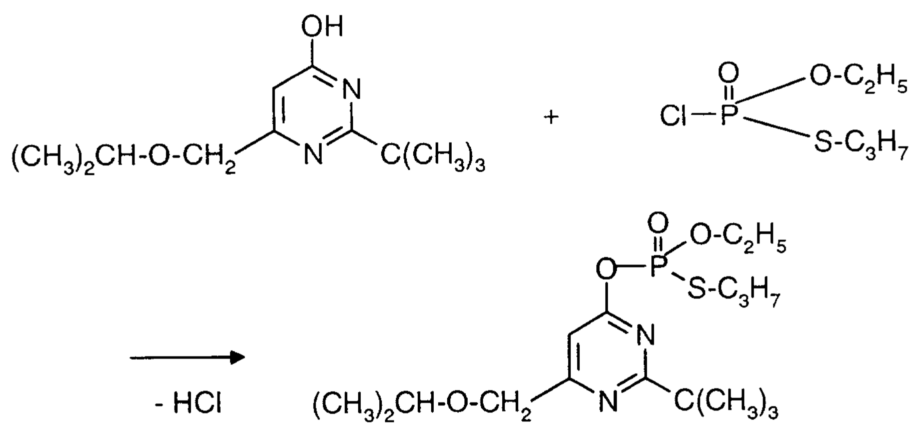


Die Ausgangsstoffe der Formel (II) sind bekannt und/oder können nach an sich bekannten Verfahren hergestellt werden (vgl. Houben-Weyl, Methoden der Organischen Chemie, Band 12/1, S. 415-420 und S. 560-563; loc. cit. Band 12/2, S. 274-292, S. 405-408, S. 607-618, S. 621-622 und S. 755-757; loc. cit. Band E2, S. 333-684).Die Ausgangsstoffe der Formel (III) sind ebenfalls bekannt und/oder können nach an sich bekannten Verfahren hergestellt werden (vgl. DE-OS 2703310).

Man erhält die Hydroxypyrimidinderivate der allgemeinen Formel (III), wenn man substituierte Acetessigester der allgemeinen Formel (IV)

$R^3$-Y-$CH_2$-CO-$CH_2$-COOR (IV)

in welcher

| | |
|---|---|
| $R^3$ und Y | die oben angegebene Bedeutung haben und |
| R | für Alkyl (insbesondere Methyl oder Ethyl) steht, |

mit Pivalamidin der Formel (V)

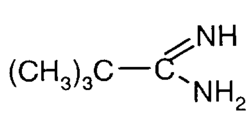

(V)

oder mit dessen Hydrochlorid
gegebenenfalls in Gegenwart eines Säureakzeptors, wie z.B. Natrium- oder Kaliumhydroxid, Natrium- oder Kalium-methylat, -ethylat, -n- oder -i-propylat, -n-, -i-, -s- oder -t-butylat, und gegebenenfalls in Gegenwart eines Verdünnungsmittels, wie z.B. Methanol, Ethanol, n- oder i-Propanol, n-, i-, s- oder t-Butanol, Dimethylformamid, Dimethylacetamid oder Wasser, bei Temperaturen zwischen 0°C und 100°C umsetzt (vgl. die Herstellungsbeispiele).

Das erfindungsgemäße Verfahren zur Herstellung der neuen Verbindungen der Formel (I) wird vorzugsweise unter Verwendung von Verdünnungsmitteln durchgeführt. Als Verdünnungsmittel kommen dabei praktisch alle inerten organischen Lösungsmittel infrage. Hierzu gehören vorzugsweise aliphatische und aromatische, gegebenenfalls halogenierte Kohlenwasserstoffe wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Diethyl- und Dibutylether, Glykoldimethylether und Diglykoldimethylether, Tetrahydrofuran und Dioxan, Ketone wie Aceton, Methyl-ethyl-, Methyl-isopropyl- und Methyl-isobutyl-keton, Ester wie Essigsäuremethylester und -ethylester, Nitrile wie z.B. Acetonitril und Propionitril, Amide wie z.B. Dimethylformamid, Dimethylacetamid und N-Methylpyrrolidon sowie Dimethylsulfoxid, Tetramethylensulfon und Hexamethylphosphorsäuretriamid.

Als Säureakzeptoren können bei dem erfindungsgemäßen Verfahren alle üblicherweise für derartige Umsetzungen verwendbaren Säurebindemittel eingesetzt werden. Vorzugsweise infrage kommen Alkalimetall- und Erdalkalimetallhydride, wie Lithium-, Natrium-, Kalium- und Calcium-hydrid, Alkalimetall- und Erdalkalimetall-hydroxide, wie Lithium-, Natrium-, Kalium- und Calcium-hydroxid, Alkalimetall- und Erdalkalimetall-carbonate und -hydrogencarbonate, wie Natrium- und Kalium-carbonat oder -hydrogencarbonat sowie Calciumcarbonat, Alkalimetall-acetate, wie Natrium- und Kalium-acetat, Alkalimetallalkoholate, wie Natrium- und Kalium-tert-butylat, ferner basische Stickstoffverbindungen, wie Trimethylamin, Triethylamin, Tripropylamin, Tributylamin, Diisobutylamin, Dicyclohexylamin, Ethyldiisopropylamin, Ethyldicyclohexylamin, N,N-Dimethylbenzylamin, N,N-Dimethyl-anilin, Pyridin, 2-Methyl-, 3-Methyl-, 4-Methyl-, 2,4-Dimethyl-, 2,6-Dimethyl-, 2-Ethyl-, 4-Ethyl- und 5-Ethyl-2-methyl-pyridin, 1,5-Diazabicyclo-[4,3,0]-non-5-en (DBN), 1,8-Diazabicyclo-[5,4,0]-undec-7-en (DBU) und 1,4-Diazabicyclo-[2,2,2]-octan (DABCO).

Die Reaktionstemperaturen können bei dem erfindungsgemäßen Verfahren in einem größeren Bereich variiert werden. Im allgemeinen arbeitet man bei Temperaturen zwischen 0°C und 100°C, vorzugsweise bei Temperaturen zwischen 10°C und 80°C.

Das erfindungsgemäße Verfahren wird im allgemeinen unter Normaldruck durchgeführt. Es ist jedoch auch möglich, unter erhöhtem oder vermindertem Druck zu arbeiten.

Zur Durchführung des erfindungsgemäßen Verfahrens werden die jeweils benötigten Ausgangsstoffe im allgemeinen in angenähert äquimolaren Mengen eingesetzt. Es ist jedoch auch möglich, eine der beiden jeweils eingesetzten Komponenten in einem größeren Überschuß zu verwenden. Die Reaktionen werden im allgemeinen in einem geeigneten Verdünnungsmittel in Gegenwart eines Säureakzeptors durchgeführt, und das Reaktionsgemisch wird mehrere Stunden bei der jeweils erforderlichen Temperatur gerührt. Die Aufarbeitung erfolgt bei dem erfindungsgemäßen Verfahren jeweils nach üblichen Methoden (vgl. die Herstellungsbeispiele).

Die neuen Verbindungen fallen in den meisten Fällen in Form von Ölen an, die sich zum Teil nicht unzersetzt destillieren lassen, jedoch durch sogenanntes "Andestillieren", d.h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Die Wirkstoffe eignen sich bei guter Pflanzenverträglichkeit und günstiger Warmblütertoxizität zur Bekämpfung von tierischen Schädlingen` insbesondere Insekten, Spinnentieren und Nematoden, die in der Landwirtschaft, in Forsten, im Vorrats- und Materialschutz sowie auf dem Hygienesektor vorkommen. Sie können vorzugsweise als Pflanzenschutzmittel eingesetzt werden. Sie sind gegen normal sensible und resistente Arten sowie gegen alle oder einzelne Entwicklungsstadien wirksam. Zu den oben erwähnten Schädlingen gehören:
Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp., Phylloxera vastatrix, Pemphigus spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Spodoptera litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Ornithomyssus spp., Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören z.B. Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die erfindungsgemäßen Verbindungen der Formel (I) zeichnen sich insbesondere durch hervorragende insektizide und nematizide Wirksamkeit aus. Sie zeigen beim Einsatz gegen Blatt- und Boden-Insekten starke Wirkung beispielsweise gegen Meerettichblattkäfer-Larven (Phaedon cochleariae), Raupen der Kohlschabe (Plutella maculipennis) und Gurkenkäfer-Larven (Diabrotica balteata). Beim Einsatz gegen Nematoden zeigen sie starke Wirkung beispielsweise gegen Globodera rostochiensis.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als

Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith. Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxy-methylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die erfindungsgemäßen Wirkstoffe bzw. Schädlingsbekämpfungsmittel eignen sich auch zur Bekämpfung von Insekten, Milben, Zecken usw. auf dem Gebiet der Tierhaltung und Viehzucht, wobei durch die Bekämpfung der Schädlinge bessere Ergebnisse, z.B. höhere Milchleistungen, höheres Gewicht, schöneres Tierfell, längere Lebensdauer usw. erreicht werden können.

Gute Bekämpfungserfolge werden erzielt beispielsweise gegen Fliegen (Lucilia cuprina und Musca domestica), gegen Schaben (Blattella germanica) und gegen Zecken (Boophilus microplus).

Die Anwendung der erfindungsgemäßen Wirkstoffe bzw. Schädlingsbekämpfungsmittel geschieht auf diesem Gebiet in bekannter Weise, wie durch äußerliche Anwendung in Form beispielsweise des Tauchens (Dippen), Sprühens (Sprayen), Aufgießen (pour-on and spot-on) und des Einpuderns.

Die Herstellung der erfindungsgemäßen Verbindungen der Formel (I) soll anhand der folgenden Beispiele erläutert werden:

Prozentangaben beziehen sich, wo nichts anderes angegeben wird, auf Gewichtsprozente.

Herstellungsbeispiele

Beispiel 1

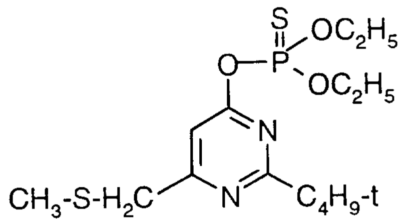

Eine Mischung aus 8,5 g (0,04 Mol) 4-Hydroxy-6-methylthiomethyl-2-tert-butyl-pyrimidin, 8,3 g (0,06 Mol) Kaliumcarbonat, 7,5 g (0,04 Mol) O,O-Diethyl-thionophosphorsäure-diesterchlorid und 50 ml Acetonitril wird 3 Stunden bei 50 °C gerührt. Dann wird auf 20 °C abgekühlt, mit 100 ml Toluol versetzt und zweimal mit je 100 ml Wasser geschüttelt. Die organische Phase wird abgetrennt, über Natriumsulfat getrocknet und im Vakuum eingedampft.

Nach Andestillieren bei 80 °C im Hochvakuum bleiben 14 g (96% der Theorie) O,O-Diethyl-O-(6-methylthiomethyl-2-tert-butyl-pyrimidin-4-yl)-thionophosphorsäureester in Form eines hellgelben Öles mit dem Brechungsindex $n_D^{20}$ = 1,5161 zurück.

Analog Beispiel 1 erhält man die folgenden Verbindungen der Formel (I)

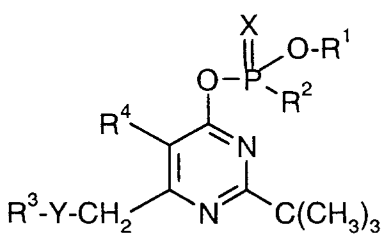

(I)

Tabelle 1: Beispiele für die Verbindungen der Formel (I)

| Bsp.-Nr. | $R^1$ | $R^2$ | $R^3$ | $R^4$ | X | Y | Brechungsindex $n_D^{20}$/T; Schmp. [°C] |
|---|---|---|---|---|---|---|---|
| 2 | $C_2H_5$ | n-$C_3H_7S$ | $CH_3$ | H | S | S | 1,5428/23° |
| 3 | $CH_3$ | $C_2H_5$ | $CH_3$ | H | S | S | 1,5316/23° |
| 4 | $C_2H_5$ | $C_2H_5O$ | $CH_3$ | H | S | $SO_2$ | 98-99 |
| 5 | $C_2H_5$ | n-$C_3H_7S$ | $CH_3$ | H | S | $SO_2$ | 1,5411/23°C |
| 6 | $CH_3$ | $C_2H_5$ | $CH_3$ | H | S | $SO_2$ | 1,5228/23° |
| 7 | n-$C_3H_7$ | $CH_3O$ | $CH_3$ | H | S | S | 1,5179/25° |
| 8 | $C_2H_5$ | n-$C_3H_7O$ | $CH_3$ | H | S | S | 1,5110/26° |
| 9 | i-$C_3H_7$ | $C_2H_5O$ | $CH_3$ | H | S | S | 1,5081/26° |
| 10 | $C_2H_5$ | n-$C_3H_7O$ | $CH_3$ | H | S | $SO_2$ | 56-57 |
| 11 | n-$C_3H_7$ | $CH_3O$ | $CH_3$ | H | S | $SO_2$ | 1,5140/26° |
| 12 | $C_2H_5$ | i-$C_3H_7O$ | $CH_3$ | H | S | $SO_2$ | 80-81 |
| 13 | $C_2H_5$ | $C_2H_5$ | $CH_3$ | H | S | $SO_2$ | 89-90 |

| Bsp.-Nr. | $R^1$ | $R^2$ | $R^3$ | $R^4$ | X | Y | Brechungsindex $n_D^{20}$ /T; Schmp. [°C] |
|---|---|---|---|---|---|---|---|
| 14 | $C_2H_5$ | $C_2H_5$ | $CH_3$ | H | S | S | 1,5271/26° |
| 15 | $C_2H_5$ | $C_2H_5O$ | $CH_3$ | H | S | O | 1,4910/24° |
| 16 | $CH_3$ | $C_2H_5$ | $CH_3$ | H | S | O | 1,5073/24° |
| 17 | $C_2H_5$ | $n\text{-}C_3H_7S$ | $CH_3$ | H | S | O | 1,5215/24° |
| 18 | $C_2H_5$ | $C_2H_5$ | $n\text{-}C_3H_7$ | H | S | S | 1,5082/27° |
| 19 | $C_2H_5$ | $i\text{-}C_3H_7O$ | $CH_3$ | H | S | O | 1,4865/24° |
| 20 | $C_2H_5$ | $n\text{-}C_3H_7O$ | $CH_3$ | H | S | O | 1,4870/24° |
| 21 | $C_2H_5$ | $CH_3$ | $CH_3$ | H | S | O | 1,5020/24° |
| 22 | $CH_3$ | $CH_3O$ | $CH_3$ | H | S | O | 1,4992/24° |
| 23 | $C_2H_5$ | $C_2H_5O$ | $C_2H_5$ | H | S | O | 1,4876/23° |
| 24 | $CH_3$ | $C_2H_5$ | $C_2H_5$ | H | S | O | 1,5011/23° |
| 25 | $C_2H_5$ | $C_2H_5O$ | $i\text{-}C_3H_7$ | H | S | O | 1,5600/23° |
| 26 | $CH_3$ | $C_2H_5$ | $i\text{-}C_3H_7$ | H | S | O | 1,500/23° |
| 27 | $C_2H_5$ | $C_2H_5$ | $CH_3$ | H | S | O | 1,5031/23° |
| 28 | $C_2H_5$ | $C_2H_5$ | $i\text{-}C_3H_7$ | H | S | S | 1,5070/22° |
| 29 | $CH_3$ | $CH_3O$ | $C_2H_5$ | H | S | O | |

| Bsp.-Nr. | $R^1$ | $R^2$ | $R^3$ | $R^4$ | X | Y | Brechungsindex $n_D^{20}$ /T; Schmp. [°C] |
|---|---|---|---|---|---|---|---|
| 30 | $C_2H_5$ | $C_2H_5$ | $C_2H_5$ | H | S | O | |
| 31 | $C_2H_5$ | $CH_3$ | $C_2H_5$ | H | S | O | |
| 32 | $C_2H_5$ | $C_2H_5O$ | $CH_3$ | H | S | $NCH_3$ | |
| 33 | $C_2H_5$ | $C_2H_5O$ | $CH_3$ | $CH_3$ | S | O | |
| 34 | $C_2H_5$ | s-BuS | $CH_3$ | H | O | O | |
| 35 | $C_2H_5$ | $C_2H_5O$ | $CH_3$ | Cl | S | O | |

Herstellung der Zwischenprodukte der Formel (III):

Beispiel (III-1)

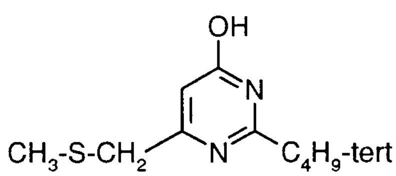

Zu einer Mischung aus 414 g (1,8 Mol) 23 proz. Natriummethylat-Lösung und 450 ml Methanol gibt man bei Raumtemperatur erst 102,4 g (0,75 Mol) Pivalamidin-Hydrochlorid und dann 132 g (0,75 Mol) 4-Methylthioacetessigester. Das Reaktionsgemisch wird über Nacht bei Raumtemperatur gerührt und dann im Vakuum eingedampft. Den Rückstand löst man in Wasser und gibt verdünnte Salzsäure zu, bis pH 5 erreicht ist. Dann saugt man das ausgefallene Produkt ab und wäscht mit kaltem Wasser nach.

Man erhält so 89,9 g (57% der Theorie) 4-Hydroxy-6-methylthiomethyl-2-tert-butylpyrimidin als farbloses Pulver mit dem Schmelzpunkt 122-123 ° C.

Analog Beispiel (III-1) erhält man die folgenden Verbindungen der Formel (III)

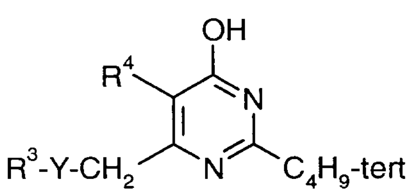

(III)

Tabelle 2

| Beispiele für die Verbindungen der Formel (III) | | | | |
|---|---|---|---|---|
| Bsp.-Nr. | $R^3$ | $R^4$ | Y | Schmp. [°C] |
| III-2 | $CH_3$ | H | $SO_2$ | 199-202 |
| III-3 | $n-C_3H_7$ | H | S | 83-84 |
| III-4 | $CH_3$ | H | O | 185-186 |
| III-5 | $C_2H_5$ | H | O | 152 |
| III-6 | $i-C_3H_7$ | H | O | 150-157 |
| III-7 | $i-C_3H_7$ | H | S | 111-112 |
| III-8 | $CH_3$ | $CH_3$ | O | |
| III-9 | $CH_3$ | H | $CH_3N$ | |
| III-10 | $CH_3$ | Cl | O | |

Die biologische Wirkung der erfindungsgemäßen Verbindungen der Formel (I) soll anhand der folgenden Beispiele erläutert werden.

Beispiel A

Phaedon-Larven-Test

Lösungsmittel: 7 Gewichtsteile Dimethylformamid
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Meerettichblattkäfer-Larven (Phaedon cochleariae) besetzt, solange die Blätter noch feucht sind.

Nach der gewünschten Zeit wird die Abtötung in % bestimmt. Dabei bedeutet 100%, daß alle Käfer-Larven abgetötet wurden; 0 % bedeutet, daß keine Käfer-Larven abgetötet wurden.

Bei diesem Test zeigten z.B. die Verbindungen gemäß den Herstellungsbeispielen 4, 8, 9 und 15 bei einer beispielhaften Wirkstoffkonzentration von 0,001% eine Abtötung von 100% nach 3 Tagen.

Beispiel B

Plutella-Test

Lösungsmittel: 7 Gewichtsteile Dimethylformamid
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen der Kohlschabe (Plutella maculipennis) besetzt, solange die Blätter noch feucht sind.

Nach der gewünschten Zeit wird die Abtötung in % bestimmt. Dabei bedeutet 100 %, daß alle Raupen abgetötet wurden; 0 % bedeutet, daß keine Raupen abgetötet wurden.

Bei diesem Test zeigten z.B. die Verbindungen gemäß den Herstellungsbeispielen 7, 8, 9, 11, 14, 15, 16, 18, 20, 21, 22, 24 und 26 bei einer beispielhaften Wirkstoffkonzentration von 0,001% eine Abtötung von 100% nach 3 Tagen.

Beispiel C

Grenzkonzentrations-Test / Bodeninsekten

Testinsekt: Diabrotica balteata - Larven im Boden
Lösungsmittel: 4 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration. Dabei spielt die Konzentration des Wirkstoffes in der Zubereitung praktisch keine Rolle, entscheidend ist allein die Wirkstoffgewichtsmenge pro Volumeneinheit Boden, welche in ppm (mg/l) angegeben wird. Man füllt den Boden in 0,5 l Töpfe und läßt diese bei 20 °C stehen.

Sofort nach dem Ansatz werden je Topf 5 vorgekeimte Maiskörner ausgelegt. Nach 1 Tag werden in den behandelten Boden die entsprechenden Testinsekten gesetzt. Nach weiteren 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet sind und 0 %, wenn noch genau so viele Testinsekten leben wie in der unbehandelten Kontrolle.

Bei diesem Test zeigten z.B. die Verbindungen der Herstellungsbeispiele 7 und 14 bei einer beispielhaften Wirkstoffkonzentration von 20 ppm eine 100%ige Abtötung der Testinsekten.

Beispiel D

Grenzkonzentrations-Test/Nematoden

Testnematode: Globodera rostochiensis
Lösungsmittel: 4 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm (= mg/l) angegeben wird. Man füllt den behandelten Boden in Töpfe, pflanzt Kartoffeln ein und hält die Töpfe bei einer Gewächshaustemperatur von 20 °C.

Nach sechs Wochen werden die Kartoffelwurzeln auf Zysten untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

In diesem Test zeigten z.B. die Verbindungen der Herstellungsbeispiele 15 und 16 bei einer beispielhaften Wirkstoffkonzentration von 20 ppm eine 100 %ige Abtötung der Testnematoden.

Beispiel E

Test mit Lucilia cuprina resistent-Larven

Emulgator: 35 Gewichtsteile Ethylenglykolmonomethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Gemisches und verdünnt das so erhaltene Konzentrat mit Wasser auf die jeweils gewünschte Konzentration.

Etwa 20 Lucilia cuprina res.-Larven werden in ein Teströhrchen gebracht, welches ca. 1 $cm^3$ Pferdefleisch und 0,5 ml der Wirkstoffzubereitung enthält. Nach 24 Stunden wird der Abtötungsgrad bestimmt. Dabei bedeutet 100%, daß alle Blowfly-Larven abgetötet wurden; 0% bedeutet, daß keine Blowfly-Larven abgetötet wurden.

Bei diesem Test zeigten z.B. die Verbindungen gemäß den Herstellungsbeispielen 2, 3, 4, 5 und 6 bei einer beispielhaften Wirkstoffkonzentration von 100 ppm eine 100%ige Abtötung der Testinsekten.

Beispiel: F

Testinsekten: Musca domestica, Stamm WHO-N

Lösungsmittel: 35 Gewichtsteile Ethylenglykolmonomethylether
35 Gewichtsteile Nonylphenolpolyglykolether

Zwecks Herstellung einer geeigneten Formulierung vermischt man drei Gewichtsteile Wirkstoff mit sieben Teilen des oben angegebenen Lösungsmittel-Emulgator-Gemisches und verdünnt das so erhaltene Emulsionskonzentrat mit Wasser auf die jeweils gewünschte Konzentration.

2 ml dieser Wirkstoffzubereitung werden auf Filterpapierscheiben (Ø 9,5 cm) pipettiert, die sich in Petrischalen entsprechender Größe befinden. Nach Trocknung der Filterscheiben werden 25 Testtiere in die Petrischale überführt und abgedeckt.

Der Zustand der Testinsekten wird bis zu 24 Stunden laufend kontrolliert. Es wird diejenige Zeit ermittelt, die für eine 100 %ige knock down-Wirkung ($LT_{100}$) erforderlich ist. Wird die $LT_{100}$ nach 24 Stunden nicht erreicht, wird der %-Satz der knock down gegangenen Testtiere festgestellt.

Bei diesem Test zeigten z.B. die Verbindungen der Herstellungsbeispiele 3, 4, 8, 9, 14, 15, 16, 27 und 28 bei einer beispielhaften Wirkstoffkonzentration von 100 ppm eine 100%ige knock down-Wirkung.

Beispiel G

Schabentest

Testinsekten: Blattella germanica
Lösungsmittel: 35 Gewichtsteile Ethylenglykolmonomethylether 35 Gewichtsteile Nonylphenolpolyglykolether

Zwecks Herstellung einer geeigneten Formulierung vermischt man drei Gewichtsteile Wirkstoff mit sieben Teilen des oben angegebenen Lösungsmittel-Emulgator-Gemisches und verdünnt das so erhaltene Emulsionskonzentrat mit Wasser auf die jeweils gewünschte Konzentration.

2 ml dieser Wirkstoffzubereitung werden auf Filterpapierscheiben (Ø 9,5 cm)) pipettiert, die sich in Petrischalen entsprechender Größe befinden. Nach Trocknung der Filterscheiben werden 5 Testtiere bei B. germanica bzw. bei P. americana in die Petrischale überführt und abgedeckt.

Der Zustand der Testinsekten wird 3 Tage nach Ansetzen der Versuche kontrolliert. Es wird diejenige Zeit ermittelt, die für eine 100 %ige knock down-Wirkung ($LT_{100}$) erforderlich ist. Wird die $LD_{100}$ nach 6 Stunden nicht erreicht, wird der %-Satz der knock down gegangenen Testtiere festgestellt.

Bei diesem Test zeigten z.B. die Verbindungen der Herstellungsbeispiele 3 und 16 bei einer beispielhaften Wirkstoffkonzentration von 100 ppm eine 100%ige knock down-Wirkung.

**Patentansprüche**

**1.** Substituierte tert-Butyl-pyrimidinyl-(thio)phosphor(phosphon)säureester(amide) der allgemeinen Formel (I)

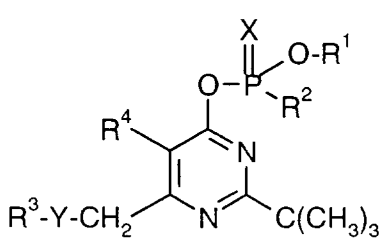

(I)

in welcher
$R^1$ für Alkyl steht,
$R^2$ für Alkyl, Alkoxy, Alkylthio oder Alkylamino steht,
$R^3$ für Alkyl steht,
$R^4$ für Wasserstoff, Halogen oder Alkyl steht,
X für Sauerstoff oder Schwefel steht und

Y für Sauerstoff, Schwefel, Sulfinyl (SO), Sulfonyl ($SO_2$) oder N-Alkyl steht.

**2.** Verbindungen gemäß Anspruch 1, in welchen
$R^1$ für $C_1$-$C_8$-Alkyl steht,
$R^2$ für $C_1$-$C_8$-Alkyl, $C_1$-$C_8$-Alkoxy, $C_1$-$C_8$-Alkylthio, Mono-($C_1$-$C_5$-alkyl)-amino oder Di-($C_1$-$C_5$-alkyl)amino steht,
$R^3$ für $C_1$-$C_8$-Alkyl steht,
$R^4$ für Wasserstoff, Halogen, oder $C_1$-$C_8$-Alkyl steht,
Y für Sauerstoff, Schwefel, Sulfinyl, Sulfonyl oder N-($C_1$-$C_6$-Alkyl) steht und
X für Sauerstoff oder Schwefel steht.

**3.** Verbindungen gemäß Anspruch 1, in welchen
$R^1$ für $C_1$-$C_6$-Alkyl steht,
$R^2$ für $C_1$-$C_6$-Alkyl, $C_1$-$C_6$-Alkoxy, $C_1$-$C_6$-Alkylthio, Mono-($C_1$-$C_4$-alkyl)-amino oder Di-($C_1$-$C_4$-alkyl)amino steht,
$R^3$ für $C_1$-$C_6$-Alkyl steht,
$R^4$ für Wasserstoff, Halogen, oder $C_1$-$C_6$-Alkyl steht,
Y für Sauerstoff, Schwefel, Sulfinyl, Sulfonyl oder N-($C_1$-$C_4$-Alkyl) steht,
X für Sauerstoff oder Schwefel steht.

**4.** Verbindungen gemäß Anspruch 1, in welchen
$R^1$ für $C_1$-$C_4$-Alkyl steht,
$R^2$ für $C_1$-$C_4$-Alkyl, $C_1$-$C_4$-Alkoxy, $C_1$-$C_4$-Alkylthio, Mono-($C_1$-$C_3$-alkyl)-amino oder Di-($C_1$-$C_3$-alkyl)amino steht,
$R^3$ für $C_1$-$C_4$-Alkyl steht,
$R^4$ für Wasserstoff, Halogen, oder $C_1$-$C_4$-Alkyl steht,
Y für Sauerstoff, Schwefel, Sulfinyl, Sulfonyl oder N-($C_1$-$C_3$-Alkyl) steht,
X für Sauerstoff oder Schwefel steht.

**5.** Verfahren zur Herstellung der substituierten tert-Butyl-pyrimidinyl-(thio)phosphor(phosphon)säureester-(amide) der allgemeinen Formel (I) gemäß Anspruch 1, dadurch gekennzeichnet, daß man (Thio)Phosphor(phosphon)säureester(amid)chloride der allgemeinen Formel (II)

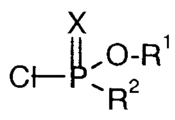

(II)

in welcher
$R^1$, $R^2$ und X die in Anspruch 1 angegebene Bedeutung haben,
mit Hydroxypyrimidinderivaten der allgemeinen Formel (III)

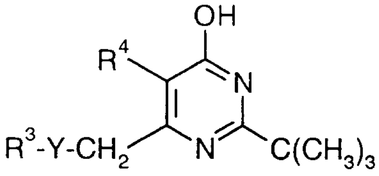

(III)

in welcher
$R^3$, $R^4$ und Y die in Anspruch 1 angegebene Bedeutung haben,
gegebenenfalls in Gegenwart eines Säureakezptors und gegebenenfalls in Gegenwart eines Verdünnungsmittels umsetzt.

**6.** Schädlingsbekämpfungsmittel, gekennzeichnet durch einen Gehalt an mindestens einer Verbindung der Formel (I) gemäß Anspruch 1.

**7.** Verwendung von Verbindungen der Formel (I) gemäß Anspruch 1 zur Bekämpfung von Schädlingen.

**8.** Verfahren zur Bekämpfung von Schädlingen, dadurch gekennzeichnet, daß man Verbindungen der Formel (I) gemäß den Anspruch 1 auf die Schädlinge und/oder ihren Lebensraum einwirken läßt.

**9.** Verfahren zur Herstellung von Schädlingsbekämpfungsmitteln, dadurch gekennzeichnet, daß man Verbindungen der Formel (I) gemäß Anspruch 1 mit Streckmitteln und/oder oberflächenaktiven Mitteln vermischt.

Europäisches Patentamt

# EUROPÄISCHER RECHERCHENBERICHT

Nummer der Anmeldung
EP 94 10 7766

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | US-A-4 489 068 (DONALD H. DE VRIES) * the whole document and particularly columns 15 and 16, table I, compounds 33 and 34 * | 1-9 | C07F9/6512 A01N57/08 |
| D,Y | DE-A-27 03 310 (BAYER A.G.) * das ganze Dokument * | 1,5-9 | |
| D,Y | DE-A-28 04 889 (HOECHST A.G.) * das ganze Dokument * | 1,5-9 | |
| Y | EP-A-0 305 840 (BAYER A.G.) * das ganze Dokument * | 1,5-9 | |

RECHERCHIERTE SACHGEBIETE (Int.Cl.5)
C07F
A01N

Der vorliegende Recherchenbericht wurde für alle Patentansprüche erstellt

| Recherchenort | Abschlußdatum der Recherche | Prüfer |
|---|---|---|
| DEN HAAG | 14. September 1994 | Beslier, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)